# EUROPÄISCHE PATENTSCHRIFT

(11) **EP 1 514 908 B1**
(45) Veröffentlichungstag und Bekanntmachung des Hinweises auf die Patenterteilung: **01.08.2007**
(21) Anmeldenummer: 04019881.4
(22) Anmeldetag: 21.08.2004
(51) Int. Cl.: A23G 1/00

(54) **Verfahren zur Herstellung fliessfähiger konzentrierter Suspensionssysteme und nach diesem Verfahren hergestellte suspensionsbasierte Produkte**
Process for preparing concentrated flowable dispersions and prepared dispersion based products thereof
Procédé pour la fabrication de suspension concentrée de consistance fluide et produits à base de dispersions préparés

(30) Priorität: 10.09.2003 DE 10342114
(43) Veröffentlichungstag der Anmeldung: 16.03.2005
(73) Patentinhaber: Kraft Foods R&D, Inc., 81737 München (DE); Emmi Schweiz AG, 6002 Luzern (CH)
(72) Erfinder: Windhab, Erich, Prof.Dr., 8261 Hemishofen (CH); Marti, Irene, Dipl.Ing., 8005 Zürich (CH)
(74) Vertreter: Beyer, Rudi

(56) Entgegenhaltungen:
- US-A- 5 228 912
- US-B1- 6 329 331
- US-B1- 6 391 373
- ATTAIE H ET AL: "THE FUNCTIONALITY OF MILK POWDER AND ITS RELATIONSHIP TO CHOCOLATE MASS PROCESSING, IN PARTICULAR THE EFFECT OF MILK POWDER MANUFACTURING AND COMPOSITION ON THE PHYSICAL PROPERTIES OF CHOCOLATE MASSES" INTERNATIONAL JOURNAL OF FOOD SCIENCE AND TECHNOLOGY, BLACKWELL SCIENTIFIC PUBLICATIONS, OXFORD, GB, Bd. 38, Nr. 3, 2003, Seiten 325-335, XP008043315 ISSN: 0950-5423

## Beschreibung

Die Erfindung betrifft fließfähige Suspensionssysteme mit Partikeln unterschiedlicher Formklassen.

Des weiteren betrifft die Erfindung ein Produkt.

Außerdem betrifft die Erfindung die Verwendung eines suspensionsbasierten Produkts.

Schließlich betrifft die Erfindung ein Verfahren zum Herstellen fließfähiger Suspensionssysteme.

### Stand der Technik

Suspensionen sind mehrphasige disperse Stoffsysteme. Feststoffpartikel einer oder mehrerer Stoffarten (disperse Phase) liegen dabei suspendiert in einer kontinuierlichen Fluidphase vor, welche ihrerseits aus einer Flüssigkeit oder einem Flüssigkeitsgemisch bestehen kann. Das Fliessverhalten von Suspensionen steht wie bei allen komplex strukturierten Fluidsystemen in engem Zusammenhang mit deren disperser Struktur und deren Verhalten unter Wirkung von hydrodynamischen Spannungen (= vom Fluid in Strömung übertragene Schub /Normalspannungen). Dabei leisten sowohl die Partikeleigenschaften (Größe/Größenverteilung, Partikelmorphologie, Partikelform, Oberflächeneigenschaften) als auch die Fluideigenschaften (Viskosität, Nicht-Newtonizität) wichtige Beiträge. Ferner sind Wechselwirkungen (WW) zwischen den Partikeln (van der Waals, elektrostatisch) und zwischen Fluid und Partikeln (z. B. hydrophobe Wechselwirkungen) von Belang. Die Anwesenheit von grenzflächenaktiven Substanzen kann die Wechselwirkungen zwischen Partikeln als auch zwischen Fluidphase und Partikeln maßgeblich verändern.

Allgemein ausgedrückt hängen die Fliesseigenschaften von Suspensionen von mechanischen / fluidmechanischen und physiko-chemischen Einflussfaktoren ab.

Abhängig von der Feststoffvolumenkonzentration werden Suspensionen in verdünnte, halb verdünnte und konzentrierte Suspensionen eingeteilt. Konzentrierte Suspensionen haben im Gegensatz zu verdünnten Suspensionen ein betont beanspruchungs- und zeitabhängiges Fliessverhalten. In konzentrierten Systemen kann die Erhöhung des Feststoffgehaltes um wenige Prozente zu einer Vervielfachung der Viskosität führen. Die Konzentration von Suspensionen ist durch die maximale Packungsdichte der suspendierten Partikel nach oben begrenzt. Diese liegt für monodisperse kugelförmige Partikel zwischen 0.63 (Zufallspackung) und 0.74 (hexagonal dichteste Kugelpackung). Durch die Verwendung von polydispers vorliegenden Feststoffpartikeln kann die maximale Packungsdichte erhöht, bzw. die Viskosität der Suspension bei gleich bleibender Konzentration erniedrigt werden.

Die Partikelform hat Einfluss auf die maximale Packungsdichte. Für faserförmige Partikel nimmt die maximale Packungsdichte der Zufallspackung mit steigendem Längen- zu Durchmesserverhältnis ab. Entsprechend sind für Suspensionen mit faserförmigen Partikeln höhere Viskositäten gegenüber entsprechend konzentrierten Suspensionen mit kugelförmigen Partikeln zu erwarten.

Faser- oder plättchenförmige Partikel neigen jedoch dazu sich in Strömungsrichtung bei laminaren Strömungsverhältnissen zu orientieren. Mit zunehmendem Orientierungsgrad sinkt der Fliesswiderstand und damit die Viskosität der Suspension.

Für verschiedene Partikelformen wie Plättchen, Ellipsen, Fasern, Würfel/Quader, etc. können experimentell und teilweise auch theoretisch ermittelte Daten zur Konzentrationsabhängigkeit der Viskosität in der Fachliteratur gefunden werden. Diese Daten beziehen sich auf Stoffsysteme mit nur einer Partikel-Formklasse.

Das beispielhaft ausgewählte Lebensmittelsystem Schokolade/, schokoladenähnliche Massen betrifft konzentrierte Suspensionen. Die disperse Phase besteht aus Zucker, partikulären Kakaobestandteilen und Milchpulver, während die kontinuierliche Phase meist hauptsächlich aus Kakaobutter und gegebenenfalls Anteilen anderer Fette besteht. Zur Verminderung der interpartikulären Wechselwirkungen und damit der Viskosität werden in Schokoladen in der Regel grenzflächenaktive Substanzen (z. B. Emulgator: Lecithin) zugesetzt. Bei der Herstellung von Schokoladen mit reduziertem Fettgehalt, bzw. erhöhtem Gehalt an Feststoffen, werden entweder optimierte Emulgatoren eingesetzt oder die Partikelgrößenverteilung verändert. Eine Reduktion an Feingut, d. h. eine Erhöhung der mittleren Partikelgröße wirkt sich viskositätserniedrigend aus. Die rheologischen und sensorischen Eigenschaften sollen möglichst optimal bleiben. Beispielsweise ist die Verwendung von speziellen Partikelgrößenverteilungen zur Veränderung der rheologischen Eigenschaften von Schokoladen und schokoladenähnlichen Produkten vorbekannt.

Patente bzw. Veröffentlichungen, welche Bezug nehmen auf die definierte Mischung bestimmter, mindestens zweier Partikelkollektive mit unterschiedlichen charakteristischen Partikelformen (unterschiedliche Formklassen), um die Fliesseigenschaften solcher Mischungen zu beschreiben bzw. gezielt zu nutzen liegen bislang nicht vor.

Aus der DE 42 07 722 A1 sind oberflächenmodifizierte plättchenförmige Pigmente vorbekannt, die zur Verbesserung des Aufrührverhaltens mit einem Modifizierungsreagenz bestehend aus einem Polyacrylat oder Polymethacrylat bzw. deren wasserlöslichen Salze beschichtet sind. Dadurch soll das Redispergierverhalten verbessert werden, ohne dass andere Eigenschaften wie Glanz- und Ausdruckverhalten nachteilig beeinflusst werden. Die so oberflächenmodifizierten Pigmente sollen nicht stauben und liegen als frei fließendes Material vor. Danach sollen alle bekannten plättchenförmigen Metalle wie Metalloxyde, Glimmerpigmente und sonstigen plättchenförmigen Substrate beschichtet werden. Beispiele hierfür seien Glimmer, Talkum, Kaolin und andere vergleichbare Mineralien sowie plättchenförmiges Eisenoxid und Wismutoxychlorid. Zur Herstellung der Pigmente werden die Ausgangspigmente in einem Mischgefäß, zum Beispiel einem Taumel-, Flügelrad-, Schaufel- oder Fluidmischer unter Rühren mit dem Modifizierungsreagenz versetzt. Verwendet werden danach die Pigmente insbesondere bei Farben, Druckfarben, Lacken und zur Kosmetikpräparation.

Die DE 198 01 809 A1 beschreibt ebenfalls oberflächenmodifizierte Pigmente, welche auf plättchenförmigen Substraten basieren, die zur Verbesserung des Absetz- und Aufrührverhaltens mit einem Schichtsilikat mit einem Durchmesser von 0,1 - 25 nm beschichtet sind. Dadurch habe sich überraschend gezeigt, dass Pigmente, welche auf plättchenförmigen Substraten basieren und mit einem Schichtsilikat vorzugsweise aus der Gruppe der Smectite mit einem Durchmesser von 0,1 - 25 nm (Teilchengröße im aktivierten, vollständig dispergierten Zustand) beschichtet sind, ein verbessertes Absetz- und Aufrührverhalten in Beschichtungsmassen zeigten.

Aus der US 6,391,373 B1 ist es bekannt, die rheologischen Eigenschaften von Lebensmitteln, z. B. Schokolade, durch Variierung der Partikelgröße der Inhaltsstoffe zu beeinflussen.

Aus Zorrl, Ulrich (Hrsg.) Römpp-Lexikon Lacke und Farben, Georg Thieme Verlag, Stuttgart, 1998, Seite 63, Spalte 2, ist es bekannt, Bentonite als Gelier- und Thixotropiermittel in Druckfarben und Lacken, vornehmlich in Grundierungen, Primern, aber auch in Decklacken, zu verwenden. Durch Eindringen von Löse- und Bindemittel in die kapillaren Zwischenräume der Bentonite-Plättchenstapel erfolgt unter Einwirkung von Scherkräften eine Benetzung. Dies führt zur Zerteilung der Agglomerate und zu einem merklichen Anstieg der Viskosität. Die Adhäsion, die die Plättchen zusammenhält, wird bei fortgesetzter Schereinwirkung durch Einfluss von polaren Zusatzmitteln (Aufschlussmitteln), z. B. Alkohol/Wasser, Propylencarbonat/Wasser, speziellen grenzflächenaktiven Dispergier- und Antiabsetzmitteln, überwunden. Im Ruhezustand bildet sich die ursprüngliche rheologische Struktur durch den Aufbau von Wasserstoff-Brückenbindungen zwischen den Plättchenkanten wieder voll aus.

Aus der EP 0 279 255 A1 ist eine Vorrichtung zur Herabsetzung der Viskosität in Suspensionen von Feststoffen im fetten Träger, wie Schokoladenmassen und dergleichen, vorbekannt, wobei dieselbe einen mantelartigen Behälter aufweist, der in seinem Innern eine Anzahl von untereinander mit einer Teilung entfernt angeordneten und aus Elementen bestehenden Kränzen sowie einen Eingangsstutzen und einen Ausgangsstutzen für das Produkt aufweist. In dem mantelartigen Behälter ist ein Rotor gelagert, der eine Anzahl von aus Elementen bestehenden Kränzen besitzt, wobei die genannten aus den Elementen bestehenden Kränze untereinander mit der gleichen Teilung der aus den Elementen des mantelartigen Behälters bestehenden Kränzen des mantelartigen Behälters alternierend angeordnet sind, wobei dem Rotor Antriebsmittel mit regelbarer Geschwindigkeit zugeordnet sind. Zwischen dem mantelartigen Behälter und einer äußeren Umhüllung ist ein Heizung-Kühlung-Thermostatisierungsraum vorgesehen, der einen Einlaufstutzen und einen Auslaufstutzen für eine Heizung-Kühlung-Thermostatisierungsflüssigkeit aufweist. Die Vorrichtung soll unter anderem dadurch vorteilhaft sein, dass die Herabsetzung des Viskositätswertes durch eine einfache und passende Übertragung mechanischer Energie an die behandelte Schokoladenmasse erfolgt, was zu einer möglichen Veränderung bestimmter Feststoffpartikel führen soll.

Aus der US-A-5 228 912 sind tellerförmige Farbpigmente mit einem Durchmesser von 1 bis 100 µm und einer Dicke von 0,02 bis 1,00 µm bekannt. Die Pigmente zeichnen sich durch verbesserte Dispergierbarkeit in der fertigen Farbe aus. Der Gehalt der Pigmente im fertigen Produkt beträgt bis zu 30 %.

Die US-B-6 329 331 beschreibt ein wässriges Detergens, enthaltend ein gelbildendes Polymer mit einem Gehalt von 0,5 bis 10 Prozent. Das Polymer kann eine faserförmige Form haben.

### Aufgabe

Der Erfindung liegt die Aufgabe zugrunde, fließfähige Suspensionssysteme mit Partikel unterschiedlicher Formklassen zu schaffen.

Des weiteren liegt der Erfindung die Aufgabe zugrunde, ein bestimmtes Produkt bereitzustellen.

Außerdem liegt der Erfindung die Aufgabe zugrunde, die Verwendung eines suspensionsbasierten Produkts vorzuschlagen.

Schließlich liegt der Erfindung die Aufgabe zugrunde, ein Verfahren zum Herstellen fließfähiger Suspensionssysteme bereitzustellen.

### Lösung

Die verschiedenen Aufgaben werden durch die **Patentansprüche 1** (Produkt), **4** (Verwendung eines suspensionsbasierten Produkts), **5** (Verfahren) gelöst.

### Einige Vorteile

Es konnte gefunden werden, dass durch die Beimischung eines bestimmten Anteils von länglichen, faserförmigen Partikeln zu einer konzentrierten Suspension deren Fliessverhalten gezielt verbessert werden kann. Dies bedeutet im Detail, dass in Abhängigkeit von Durchmesser, Längen- zu Durchmesserverhältnis (UD) und Anteil der beigemischten faserförmigen Partikeln eine beträchtliche Erniedrigung der stationären Scherviskosität des Suspensionssystems erzielt werden kann. Daraus resultieren bessere Produkteigenschaften wie z. B eine bessere Handhabung der Suspensionen in der Herstellung/Verarbeitung und verbesserte Konsistenz-/Fliesseigenschaften bei der Anwendung bzw. beim Konsum. Grundsätzlich ist auch die Möglichkeit geboten mit entsprechend reduziertem Fluidphasenanteil vergleichbare Eigenschaften zu einer nicht erfindungsgemäß modifizierten Suspension einzustellen.

Konzentrierte Suspensionssysteme finden sich in den meisten Industriebereichen (Chemie, Food, Pharma, Bergbau, Ölförderung / Petrochemie) als Ausgangs-, Zwischen- oder Endprodukte. Das Fliessen dieser Systeme ist von besonderer Wichtigkeit beim hydraulischen Transport sowie bei Formgebungs-, Dosier- und Abfüllprozessen. Sofern Produkte in Form konzentrierter Suspensionen vorliegen, werden deren Anwendungseigenschaften von den Fliesseigenschaften maßgeblich mitbestimmt. Im Lebensmittelbereich zählt das Verzehrverhalten zu den wichtigsten Qualitätscharakteristika. Die Fliesseigenschaften des Produktes bestimmen das Konsistenzverhalten bei der Bewegung im Mundraum sowie beim Schlucken.

Für die Herstellung bestimmter Lebensmittelprodukte, wie beispielsweise Schokolade und schokoladenähnliche Massen, besteht das Bestreben, mit möglichst weitgehend reduziertem Fettgehalt (Fluidphase im geschmolzenen Zustand), bzw. erhöhtem Gehalt an Feststoffen, dennoch gute rheologische und damit gekoppelte gute sensorische Eigenschaften zu erzielen.

Um dies zu erreichen kann der erfindungsgemäße Weg beschritten werden die Natur der Feststoffpartikeln derart zu modifizieren, dass sie einen reduzierten Fliesswiderstand in der Suspensionsströmung ausbilden. In den der Erfindung zugrundeliegenden experimentellen Untersuchungen hat sich gezeigt, dass neben den bekannten fließverbessernd wirkenden Maßnahmen des Einsatzes größerer Partikel und/oder breiterer Partikelgrößenverteilung, insbesondere die Einstellung der Partikelform für eine bestimmte Feststoffpartikelteilfraktion besonders ausgeprägte Effekte der Viskositätsreduktion zulässt. Überraschenderweise zeigte sich dabei, dass nicht die Formanpassung des gesamten oder eines überwiegenden Anteils des Partikelkollektivs, sondern nur eines Feststoffanteiles bis ca. 30% (erfindungsgemäss bevorzugt zwischen 5 und 30%) zur Einstellung eines Fliessoptimums mit minimaler Viskosität führt. Die für diesen Feststoffpartikelanteil eingestellte Partikelform ist faser- oder plättchenförmig.

Mittels des erfindungsgemäßen Verfahrens lassen sich die Fliesseigenschaften hochkonzentrierter Suspensionssysteme verbessern ohne dass Rezepturänderungen vorgenommen werden müssen. Alleine der Ersatz eines Teils der Feststoffbestandteile, durch solche gleicher stofflicher Natur jedoch mit Faser /Plättchenform liefert den erfindungsgemäßen Vorteil.

Hiermit bietet sich auch unter Einsparung der in vielen Produktanwendungen teuren Fluidphase (z. B. Kakaobutter in Confectionary Produkten) die Möglichkeit bei damit erhöhtem Feststoffanteil vergleichbare Fliesseigenschaften zum fluidreicheren herkömmlichen Produkt einzustellen.

Weiterhin von Vorteil ist für bestimmte Produkte aus dem Bereich Lebensmittel, dass eine weitgehende Faser-/Plättchenorientierung beim Verzehr im Mundraum (Scherströmung zwischen Zunge und Gaumen) die Verbesserungen der Fliesseigenschaften auch eine Verbesserung sensorischer Qualitätsmerkmale (z. B. Softness, Kremigkeit) nach sich zieht.

Für verschiedene konzentrierte Suspensionen wurde überraschenderweise herausgefunden, dass das Mischen von Partikeln gleicher bzw. vergleichbarer mittlerer Partikeldurchmesser mindestens zweier unterschiedlicher Formklassen A und B die Viskosität des Suspensionssystems bei gleichbleibender Gesamtfeststoffvolumenkonzentration erniedrigen lässt, sofern eine der beiden Partikel-Formklassen (z. B. Formklasse B) solche Partikelformen beinhaltet, die sich in laminaren Strömungen der entsprechenden konzentrierten Suspensionen in Strömungsrichtung teilweise oder vollständig orientieren können.

Durch das gezielte Ersetzen eines Volumenanteils der vorliegenden Partikel einer Formklasse A, welche z.B. kugelförmige oder kubisch würfelförmige Form besitzen (keine Vorzugsorientierung in laminaren Strömungen möglich) gegen faser- oder plättchenförmige Partikeln einer Formklasse B (Vorzugsorientierung der längsten Partikelachse in Strömungsrichtung möglich) lässt sich die stationäre Suspensionsviskosität für konstant gehaltene Feststoffvolumenkonzentration signifikant, d. h. um mehr als 5%, in manchen Fällen um mehr als 25%, erniedrigen.

Dieser erfindungsgemäße Sachverhalt wird nachfolgend mittels zweier Beispiele ausgeführt.

Beispiel 1 legt ein Modellsystem von Glaskugeln /Glasfasern zu Grunde mit je ca. 10 bis 15 µm (Mikrometer) Durchmesser.

Beispiel 2 bezieht sich auf ein reales Schokoladensystem, in welchem Teile der würfelförmig/kubischen Zuckerkomponente durch Milchproteinfasern mit jeweiligen Durchmessern von ca. 20 µm ersetzt wurden.

### Beispiel 1.: Modellsystem Glaskugeln/Glasfasern [nicht Bestandteil der Erfindung]

Suspensionen mit unterschiedlichem Faservolumenanteil und einem Gesamtfeststoffgehalt von 50 vol.-% wurden hergestellt. Als kontinuierliche Phase wurde Silikonöl mit Newton'schem Fliessverhalten und einer Viskosität von 1.94 Pas (25°C) eingesetzt. Die dispersen Bestandteile setzten sich zusammen aus Glashohlkugeln mit einem mittleren Durchmesser x_{50,3} von 11 µm und Glasfasern mit einem vergleichbaren mittleren Durchmesser x_{50,0} von 13.3 µm sowie einem mittleren Längen- zu Durchmesserverhältnis von 7.6.

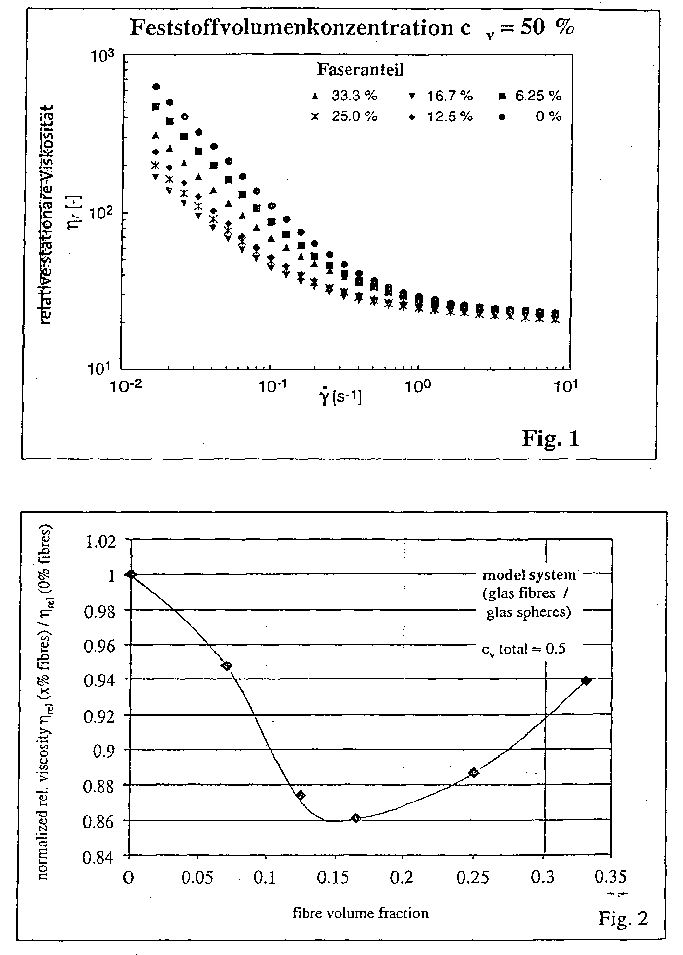

Das Fliessverhalten dieser Suspensionen wurde in einem deformationsgesteuerten Rotationsrheometer ermittelt. Als Messgeometrie wurde ein konzentrischer Zylinderspalt mit einer Spaltweite von 1 mm verwendet. Fig. 1 zeigt den Schubspannungsverlauf in Abhängigkeit der Schergeschwindigkeit für Suspensionen mit unterschiedlichem Faservolumenanteil.

In Fig. 2 ist die relative Viskosität im Bereich mittlerer Schergeschwindigkeiten (1.0 1/s) als Funktion des Faseranteils in der Suspension dargestellt.

In Fig. 1 und Fig. 2 lässt sich deutlich erkennen, dass für die Suspensionen bei denen ein Volumenanteil im Bereich von 1/6 (16.7%) mit faserförmigen Partikeln ersetzt wurde, die kleinsten Schubspannungen, bzw. Viskositäten gemessen werden. Bei höheren Faseranteilen zeigt sich hier wieder ein Viskositätsanstieg.

### Beispiel 2.: Modellschokolade mit Milchproteinfasern

50 kg einer Modellschokoladenmasse bestehend aus 59 % Zucker, 11 % Kakaopulver, 29.5 % Kakaobutter (fluide Fettphase im geschmolzenen Zustand) und 0.5% Lecithin wurden im Pilot Plant Maßstab hergestellt. Die Feststoffkomponenten wurden dabei mit einem Teil der Kakaobutter fein gewalzt (x_{50,3} = 6µm; x_{95,3} = 21 µm) und conchiert (überlagerte thermische, mechanische Knet/Mischbehandlung). Am Ende des Conchierens wurden zur Verflüssigung weitere Kakaobutter und Lecithin zugegeben. Zur rheologischen Untersuchung des Einflusses des Faservolumenanteils auf das Fliessverhalten der Modellschokoladensuspensionen wurde der Feststoffvolumenanteil auf 50 % eingestellt. Als faserförmiger Bestandteil wurde ein faserförmiges Milchpulver (gewonnen mittels eines Spinnprozesses) mit einem mittleren Faserdurchmesser x_{50,0} von 18.5µm und einem Längen- zu Durchmesserverhältnis von ca. 4 verwendet.

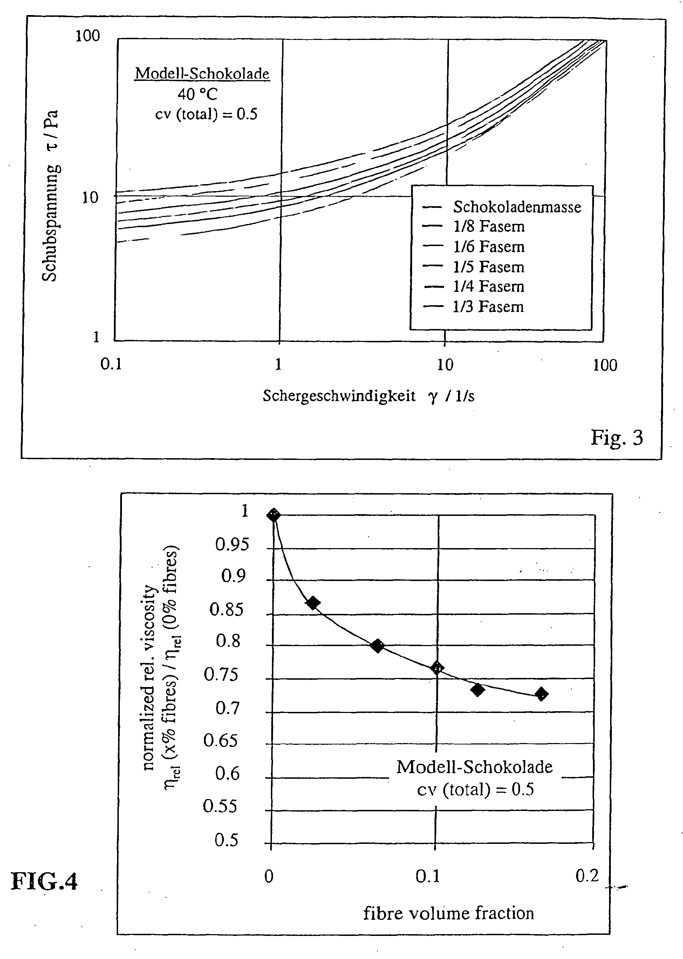

Das Fliessverhalten der Modellschokoladen wurde in einem deformationsgesteuerten Rotationsrheometer ermittelt. Als Messgeometrie wurde ein konzentrischer Zylinderspalt mit einer Spaltweite von 1 mm verwendet. Die Schokoladenproben wurden vor der Messung bei einer Temperatur von 50°C aufgeschmolzen. Die Messungen erfolgten bei einer Temperatur von 40°C. Fig. 3 zeigt den Schubspannungsverlauf in Abhängigkeit der Schergeschwindigkeit für diese Modellschokoladen mit unterschiedlichem Faservolumenanteil. In Fig. 4 ist die relative Viskosität im Bereich hoher Schergeschwindigkeiten als Funktion des Faseranteils in der Modellschokolade dargestellt. Aus Fig. 3 und Fig. 4 wird deutlich, dass bei steigendem Anteil länglicher (faserförmiger) Partikel die Viskosität der Modellschokoladen abnimmt.

### Weitere erfinderische Ausführungsformen

Weitere erfinderische Ausführungsformen sind in den Patentansprüchen 2, 3, 6 bis 9 beschrieben.

### Literaturverzeichnis

DE 42 07 722 A1
DE 198 01 809 A1
US-A 5228912
US-B 6 329 331
US 6,391,373 B1
EP 0 279 255 A1
Zorrl, Ulrich (Hrsg.) Römpp-Lexikon Lacke und Farben, Georg Thieme Verlag, Stuttgart, 1998, Seite 63, Spalte 2

## Patentansprüche

1. Fließfähige Suspensionssysteme mit Partikeln unterschiedlicher Formklassen, **dadurch gekennzeichnet, dass** das suspensionsbasierte Produkt durch Ersatz eines Teils der originären kubisch würfelförmigen bis kugelig runden Suspensionspartikel der Formklasse A, welche aus Zucker, Kakao- und Milchpulverteilchen bestehen, durch faser- bzw. plättchenförmige Milchproteinpartikel eingestellt ist, die die Formklasse B bilden, wobei die faserförmigen Milchprotein- bzw. Milchpulverteilchen mit Längen- zu Durchmesser Verhältnis von größer als drei zugesetzt sind.

2. Produkt nach Anspruch 1, **dadurch gekennzeichnet, dass** 5 bis 30 % der originären Suspensionspartikel der Formklasse A als Feststoffpartikel durch faserförmige Milchprotein- bzw. Milchpulverteilchen ersetzt werden, die die Formklasse B bilden.

3. Produkt nach Anspruch 1 oder 2, **dadurch gekennzeichnet, dass** zugesetzte Milchprotein- bzw. Milchpulverteilchen aus Proteinkonzentraten mittels Spinnverfahren und nachfolgender Formgebung, Trocknung und Zerkleinerung hergestellt sind.

4. Verwendung eines suspensionsbasierten Produkts nach Anspruch 1 oder einem der Ansprüche 2 und 3, **dadurch gekennzeichnet, dass** das suspensionsbasierte Produkt zur Verbesserung seiner Fließeigenschaften im Bereich der Lebensmittel oder Confectionary Produkte einsetzbar ist.

5. Verfahren zum Herstellen fließfähiger Suspensionssysteme gemäß Anspruch 1 oder einem der Ansprüche 2 und 3.

6. Verfahren nach Anspruch 5, **dadurch gekennzeichnet, dass** 5 bis 30 % des originären Partikelanteils der Formklasse A durch faser- und/oder plättchenförmige Partikel der Formklasse B ersetzt werden.

7. Verfahren nach Anspruch 5 oder 6, **dadurch gekennzeichnet, dass** zugesetzte faserförmige Partikel der Formklasse B ein Längen- zu Durchmesserverhältnis von ≥ 3 besitzen.

8. Verfahren nach Anspruch 5 oder einem der Ansprüche 6 und 7, **dadurch gekennzeichnet, dass** zugesetzte faserförmige Partikel der Formklasse B aus gesponnenen Fasern durch Zerkleinerung gewonnen werden.

9. Verfahren nach Anspruch 5 oder einem der Ansprüche 6 bis 8, **dadurch gekennzeichnet, dass** zugesetzte faserförmige Partikel der Formklasse B aus Proteinkonzentraten durch einen Spinnprozess mit anschließender Trocknung und Zerkleinerung gewonnen werden.

## Claims

1. Flowable suspension systems with particles of different form classes, **characterized in that** the suspension-based product is established by replacement of some of the original cubically dice-shaped to spherically round suspension particles of form class A, which comprise sugar and cacao and milk powder particles, by fibrous or platelet-shaped milk protein particles which form the form class B, the fibrous milk protein or milk powder particles being added with a length to diameter ratio of greater than three.

2. Product according to claim 1, **characterized in that** 5 to 30 % of the original suspension particles of form class A as solid particles are replaced by fibrous milk protein or milk powder particles which form the form class B.

3. Product according to claim 1 or 2, **characterized in that** added milk protein or milk powder particles are prepared from protein concentrates by means of a spinning process and subsequent shaping, drying and comminution.

4. Use of a suspension-based product according to claim 1 or one of claims 2 and 3, **characterized in that** the suspension-based product can be employed for improving its flow properties in the field of foodstuffs or confectionery products.

5. Process for the preparation of flowable suspension systems according to claim 1 or one of claims 2 and 3.

6. Process according to claim 5, **characterized in that** 5 to 30 % of the original particle content of form class A are replaced by fibrous and/or platelet-shaped particles of form class B.

7. Process according to claim 5 or 6, **characterized in that** added fibrous particles of form class B have a length to diameter ratio of ≥ 3.

8. Process according to claim 5 or one of claims 6 and 7, **characterized in that** added fibrous particles of form class B are obtained from spun fibres by comminution.

9. Process according to claim 5 or one of claims 6 to 8, **characterized in that** added fibrous particles of form class B are obtained from protein concentrates by a spinning process with subsequent drying and comminution.

## Revendications

1. Systèmes à suspension coulants, contenant des particules appartenant à différentes classes de formes, **caractérisés en ce que** le produit basé sur la suspension a été ajusté par remplacement d'une partie des particules originelles en suspension, en forme de dés cubiques à sphériques appartenant à la classe de formes A et composés de sucre, de particules de cacao et de lait en poudre, par des particules protéiques du lait en forme de fibres et/ou de plaquettes, formant la classe de formes B, sachant que les particules de protéines lactiques et/ou de poudre de lait en forme de fibres qui ont été ajoutées présentent un rapport longueur / diamètre supérieur à trois.

2. Produit selon la revendication 1, **caractérisé en ce que** 5 à 30 % des particules originelles en suspension appartenant à la classe de formes A et constituant des particules de matière solide sont remplacées par des particules de protéines lactiques et/ou de poudre de lait en forme de fibres, ces particules formant la classe de formes B.

3. Produit selon la revendication 1 ou 2, **caractérisé en ce que** les particules ajoutées de protéines lactiques et/ou de poudre de lait ont été fabriquées à partir de concentrés protéiques par des procédés de filage suivis d'un dispositif leur donnant forme, d'un séchage et d'un broyage.

4. Utilisation d'un produit basé sur une suspension, selon la revendication 1 ou l'une des revendications 2 et 3, **caractérisé en ce que** le produit basé sur la suspension est utilisable dans le domaine des aliments ou des produits de confiserie pour améliorer leurs propriétés coulantes.

5. Procédé servant à confectionner des systèmes à suspension coulants conformément à la revendication 1 ou l'une des revendications 2 et 3.

6. Procédé selon la revendication 5, **caractérisé en ce que** 5 à 30% de la part originelle de particules appartenant à la classe de formes A sont remplacés par des particules en forme de fibres et/ou de plaquettes, particules qui appartiennent à la classe de formes B.

7. Procédé selon la revendication 5, **caractérisé en ce que** les particules ajoutées en forme de fibres, de la classe de forme B, présentent un rapport longueur / diamètre > à 3.

8. Procédé selon la revendication 5 ou l'une des revendications 6 et 7, **caractérisé en ce que** les particules ajoutées en forme de fibres, appartenant à la classe de formes B, sont obtenues par broyage à partir de fibres filées.

9. Procédé selon la revendication 5 ou l'une des revendications 6 à 8, **caractérisé en ce que** les particules ajoutées en forme de fibres, appartenant à la classe de formes B, sont obtenues à partir de concentrés protéiques subissant un processus de filage suivi d'un séchage et d'un broyage.
